# EUROPEAN PATENT APPLICATION

(11) **EP 3 043 604 A1**
(43) Date of publication of application: **13.07.2016**
(21) Application number: 16150041.8
(22) Date of filing: 04.01.2016
(51) Int. Cl.: H04W 52/02

(54) **NETWORK-ASSISTED POWER CONSUMPTION REDUCTION IN A WIRELESS COMMUNICATION TERMINAL**

(30) Priority: 06.01.2015 US 201562100378 P
(71) Applicant: Marvell World Trade Ltd., St. Michael 14027 (BB)
(72) Inventor: MOSHAVI, Shimon, 99590 Bet Shemesh (IL); MELZER, Ezer, 69351 Tel Aviv (IL); PERETS, Yona, 4355306 Ra'anana (IL)
(74) Representative: Grünecker Patent- und Rechtsanwälte PartG mbB

(57) **Abstract**

A method for wireless communication includes receiving in a wireless communication terminal, which is configured to receive and transmit signals using one or more transceiver chains, an instruction from a base station to modify electrical power consumption of the wireless communication terminal. In response to the instruction, the electrical power consumption is modified by performing one or more of: (i) modifying a number of the transceiver chains that are active and (ii) modifying a clock rate in the wireless communication terminal.

## Description

### CROSS-REFERENCE TO RELATED APPLICATIONS

This application claims the benefit of U.S. Provisional Patent Application 62/100,378, filed January 6, 2015, whose disclosure is incorporated herein by reference.

### FIELD OF THE DISCLOSURE

The present disclosure relates generally to wireless communication, and particularly to methods and systems for reducing power consumption in wireless communication terminals.

### BACKGROUND

Low power consumption is a prime consideration in the design of wireless communication terminals. Some applications of wireless communication terminals, e.g, Internet-of-Things (IoT) or Machine-Type Communication (MTC) applications, are particularly sensitive to power consumption.

Machine-Type Communication (MTC) wireless terminals are addressed, for example, by the 3rd Generation Partnership Project (3GPP), in "Technical Specification Group Radio Access Network; Study on provision of low-cost Machine-Type Communications (MTC) User Equipments (UEs) based on LTE (Release 12)," TR 36.888, version 12.0.0, June, 2013, which is incorporated herein by reference.

The description above is presented as a general overview of related art in this field and should not be construed as an admission that any of the information it contains constitutes prior art against the present patent application.

### SUMMARY

An embodiment that is described herein provides a method for wireless communication, including receiving in a wireless communication terminal, which is configured to receive and transmit signals using one or more transceiver chains, an instruction from a base station to modify electrical power consumption of the wireless communication terminal. In response to the instruction, the electrical power consumption is modified by performing one or more of: (i) modifying a number of the transceiver chains that are active and (ii) modifying a clock rate in the wireless communication terminal.

In some embodiments, modifying the number of the transceiver chains includes performing one or more of: disabling or enabling one or more reception chains used for receiving the signals in the wireless communication terminal; and disabling or enabling one or more transmission chains used for transmitting the signals from the wireless communication terminal.

In some embodiments, modifying the clock rate includes switching from a first mode in which the wireless communication terminal performs signal processing of the transmitted or received signals with a first processing bandwidth, to a second mode in which the wireless communication terminal performs the signal processing with a second processing bandwidth, different from the first processing bandwidth.

In an embodiment, the method further includes, prior to receiving the instruction, sending from the wireless communication terminal to the base station a notification indicating that the wireless communication terminal supports an operational mode in which the electrical power consumption is reduced.

There is additionally provided, in accordance with an embodiment that is described herein, a wireless communication terminal including a transceiver and a processor. The transceiver is configured to receive and transmit signals using one or more transceiver chains. The processor is configured to receive an instruction from a base station to modify electrical power consumption of the wireless communication terminal, and, in response to the instruction, to modify the electrical power consumption by performing one or more of: (i) modifying a number of the transceiver chains that are active, and (ii) modifying a clock rate in the terminal.

There is further provided, in accordance with an embodiment that is described herein, a method for wireless communication. The method includes, in a wireless communication network, selecting a wireless communication terminal served by the wireless communication network. An instruction is sent to the selected wireless communication terminal to perform one or more of: (i) modify a number of active transceiver chains in the wireless communication terminal; and (ii) modify a clock rate in the wireless communication terminal; so as to modify electrical power consumption of the selected wireless communication terminal.

In some embodiments, selecting the wireless communication terminal includes identifying excess traffic capacity in a geographical area, and selecting the wireless communication terminal from among wireless communication terminals in that geographical area. In an embodiment, the method includes, prior to sending the instruction, receiving in the wireless communication network a notification from the wireless communication terminal to be selected indicating that the wireless communication terminal supports a mode that modifies the number of the active transceiver chains or modifies the clock rate.

In some embodiments the method includes compensating in the wireless communication network for reduced performance of the selected wireless communication terminal, by modifying a communication scheme used for communicating with the selected wireless terminal. In one embodiment, modifying the communication scheme includes modifying a power level of a signal exchanged with the selected wireless terminal. In another embodiment, modifying the communication scheme includes adding one or more of: (i) time, (ii) frequency and (iii) spatial resources for communicating with the selected wireless terminal.

In yet another embodiment, modifying the communication scheme includes increasing a number of signals that are transmitted jointly to the selected wireless terminal over one or more of: (i) time, (ii) frequency and (iii) spatial resources. In still another embodiment, modifying the communication scheme includes communicating with the selected wireless terminal using multiple coordinated base stations.

In an example embodiment, selecting the wireless communication terminal includes assessing whether the wireless communication terminal is Idle or Connected. In another embodiment, selecting the wireless communication terminal includes assessing a quality of one or more channels exchanged between the wireless communication terminal and the wireless communication network. In a disclosed embodiment, selecting the wireless communication terminal includes assessing a power level with which the wireless communication terminal is requested to transmit uplink signals to the wireless communication network.

There is also provided, in accordance with an embodiment that is described herein, an apparatus for communication including an interface and a processor. The interface is configured for configuring a wireless communication network. The processor is configured to select a wireless communication terminal served by the wireless communication network, and to send to the selected wireless communication terminal via the interface an instruction to perform one or more of: (i) modify a number of active transceiver chains in the wireless communication terminal, and (ii) modify a clock rate in the wireless communication terminal, so as to modify electrical power consumption of the wireless communication terminal.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a wireless communication system, in accordance with an embodiment that is described herein; and
Fig. 2 is a flow chart that schematically illustrates a method for reducing power consumption in wireless communication terminals, in accordance with an embodiment that is described herein.

### DETAILED DESCRIPTION OF EMBODIMENTS

Embodiments that are described herein provide improved methods and systems for reducing power consumption in wireless communication terminals. In some disclosed embodiments, a wireless communication system comprises multiple base stations (BSs) and multiple wireless communication terminals. One or more of the terminals support a reduced-power-consumption mode in which the terminal reduces its power consumption by disabling one or more transceiver chains, and/or by reducing a clock rate.

Terminals that support the reduced-power-consumption mode typically switch into and out of this mode in response to instructions that they receive from the base stations. Terminals also typically report their capability to apply the reduced-power-consumption mode, to the base stations, using suitable uplink signaling.

Disabling transceiver chains and reducing clock rates help to reduce power consumption, but on the other hand degrade the spectral efficiency and other performance measures of the terminal. Thus, in some embodiments, a processor on the network-side of the wireless communication system assesses whether spectral-efficiency degradation can be tolerated at a certain point in time and/or in a certain geographical area. If so, the processor selects one or more terminals that support the reduced-power-consumption mode, and instructs them to reduce power consumption.

Example techniques and criteria for deciding whether spectral-efficiency degradation is tolerable, and for selecting terminals whose power consumption is to be reduced, are described herein. In some embodiments, when instructing a terminal to reduce power consumption, the network-side processor also instructs the BS that serves this terminal to compensate for the resulting performance degradation. Various network-side compensation means are also described herein.

The methods and systems described herein enable wireless communication terminals to reduce power consumption and thus prolong their battery life. By suitably applying power-consumption reduction in selected areas when various conditions, for example traffic conditions, permit, the system is able to minimize the performance degradation associated with lower power consumption, in an embodiment.

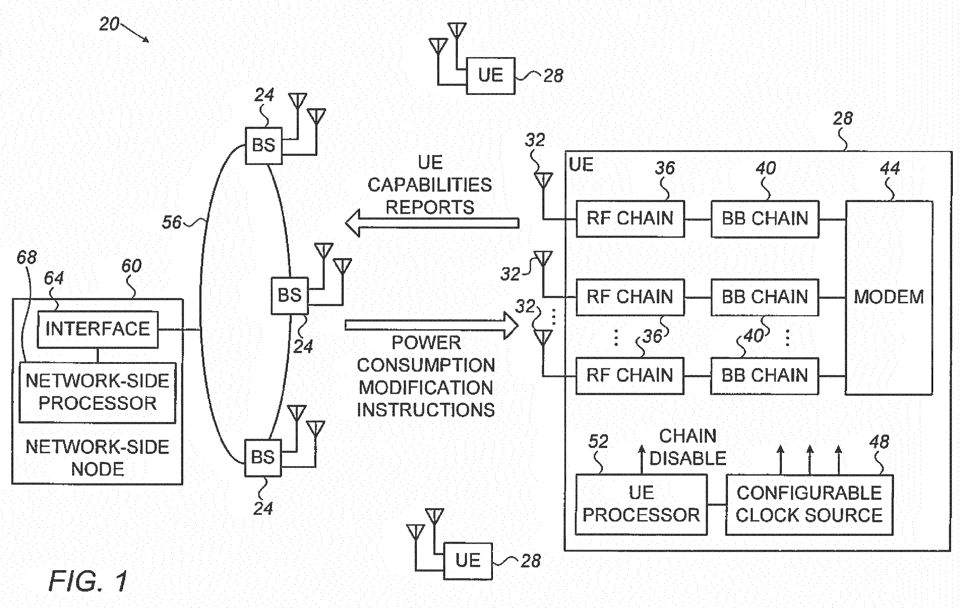

Fig. 1 is a block diagram that schematically illustrates a wireless communication system 20, in accordance with an embodiment that is described herein. System 20 comprises multiple Base Stations (BSs) 24 that provide various communication services to multiple wireless communication terminals (also referred to as User Equipment - UE) 28.

UEs 28 may comprise, for example, cellular phones, smartphones, cellular and/or wireless-enabled tablet computers, wireless-enabled computing devices, wireless-enabled Internet-of-Things (IoT) or Machine-Type Communication (MTC) devices, or any other suitable type of wireless communication terminal.

In the present example BSs 24 and UEs 28 operate in accordance with the 3GPP Long-Term Evolution (LTE) specifications. In alternative embodiments, the disclosed techniques are applicable to various other types of communication networks and systems that operate in accordance with various other suitable communication standards or protocols.

In the embodiment of Fig. 1, UE 28 comprises multiple antennas 32, connected to multiple respective Radio-Frequency (RF) chains 36 and multiple respective Baseband (BB) chains 40. Antennas 32, RF chains 36 and BB chains 40 are typically configured both to transmit uplink signals to BS 24, and to receive downlink signals from BS 24. Each RF chain 36 performs various RF processing functions such as signal up-conversion and/or down-conversion. Each BB chain 40 performs various BB processing functions such as digital filtering. Operating multiple chains is useful, for example, for implementing various diversity, beamforming and/or spatial multiplexing schemes.

In the present example, UE 28 further comprises a modem 44. On transmission, modem 44 typically generates appropriate digital uplink signals and provides the signals to BB chains 40 for transmission. On reception, modem 44 typically receives digital downlink signals from BB chains 40 for demodulation and decoding.

In an embodiment, UE 28 further comprises a UE processor 52 and a configurable clock source 48. UE processor 52 carries out the various management and control tasks of UE 28.

Clock source 48 generates one or more clock signals for various uses in the UE. In an embodiment, the clock signals are used for clocking digital circuitry in BB chains 40 and/or in modem 44, for generating Local Oscillator (LO) signals for up-conversion and/or down-conversion in RF chains 36, and/or for any other use. The clock rates of one or more of the clock signals produced by source 48 are configurable.

Among other tasks, UE processor 52 manages the power consumption of UE 28 using methods that are described in detail below. In some embodiments, UE processor 52 reduces power consumption by selectively reducing the clock rates of one or more of the clock signals produced by source 48. Reducing a clock rate of a circuit (e.g., a BB chain or a module in modem 44) typically reduces the power consumption, but also the processing bandwidth of this circuit.

In one example embodiment of an LTE UE, when using the normal clock rate, UE 28 is able to process signals in a bandwidth of 20 MHz. When using the reduced clock rate, the UE is able to process signals in a bandwidth of only 1.4 MHz. Processing-bandwidth reduction may be applied in downlink processing, uplink processing, or both. In addition to processing bandwidth, reducing the clock rate can also be used for reducing RF bandwidth in RF chains 36, and/or for reducing digital signal bandwidth in BB chains 40 and/or modem 44.

Additionally or alternatively, in some embodiments UE processor 52 is configured to reduce power consumption by disabling one or more selected RF chains 36 and/or BB chains 40 during reception and/or transmission. In this context, each pair of RF chain and its respective BB chain is referred to herein as a transceiver chain. Disabling a transceiver chain reduces power consumption, but also degrades the reception performance of the UE. It is noted that, in an embodiment, the degraded performance of the UE may still be suitable for use in various IoT, MTC or similar applications.

Disabling a transceiver chain, under control of UE processor 52, may involve disabling the RF chain of this transceiver chain, disabling the BB chain of this transceiver chain, or both. Any deactivation or reconfiguration of circuitry in the transceiver chain, whether complete or partial, which causes reduction in the power consumption of the transceiver chain relative to the normal mode of operation of the transceiver chain, is regarded as disabling the transceiver chain.

In some embodiments, disabling a transceiver chain involves disabling only the transmission functions of the transceiver chain. In other embodiments, disabling a transceiver chain involves disabling only the reception functions of the transceiver chain. In yet other embodiments, disabling a transceiver chain involves disabling both the transmission functions and the reception functions of the transceiver chain.

In an embodiment, UE 28 supports at least a normal operational mode and a reduced-power-consumption operational mode. In the normal mode, UE processor 52 configures clock source 48 to generate the clock signals with normal clock rates, and activates all transceiver chains. In the reduced-power-consumption mode, UE processor 52 configures clock source 48 to reduce one or more of the clock rates, and/or disables one or more of the transceiver chains. UE processor 52 typically switches between the modes in response to instructions received from BS 24.

In other words, UE processor 52 modifies (i.e., reduces or increases) the power consumption of the UE by switching between the normal operational mode and the reduced-power-consumption operational mode. Switching between the two modes involves modifying (reducing or increasing) the number of active transceiver chains, and/or modifying (reducing or increasing) one or more of the clock rates in the UE.

On the network-side of system 20, BSs 24 typically communicate with various network-side nodes using suitable backbone interfaces 56. In the present example, a network-side node 60 is configured to manage power consumption of selected UEs 28. In the present example, node 60 comprises an interface 64 for communicating with BSs 24, and a network-side processor 68 that is configured to carry out the methods described herein. BSs 24 and network-side node 60 are referred to herein collectively as a wireless communication network (or simply "a network") that serves UEs 28.

In some embodiments, network-side processor 68 assesses traffic or other communication conditions in system 20, assesses the capabilities of various UEs 28 to reduce power consumption, and, when appropriate, selects one or more UEs and instruct the selected UEs to reduce power consumption. In some embodiments, when conditions require, network-side processor 68 instruct one or more of the selected UEs to switch back to the normal mode.

In an embodiment, when instructing a UE 28 to reduce power consumption, network-side processor 68 also instructs one or more BSs 24 to compensate for at least some of the resulting performance degradation using network-side measures. Such techniques are also described in detail below.

The UE and system configurations shown in Fig. 1 are example configurations, which are depicted solely for the sake of clarity. In alternative embodiments, any other suitable UE and/or system configuration can also be used. Some UE and system elements that are not mandatory for understanding of the disclosed techniques have been omitted from the figure for the sake of clarity.

In some embodiments, different UEs 28 in system 20 have different configurations. For example, different UEs may have different numbers of antennas and transceiver chains. Some UEs may support the capability to reduce power consumption using the disclosed techniques, whereas other UEs may not have this capability. A UE that supports power-consumption reduction may perform this function by only reducing clock rate, only disabling one or more transceiver chains, or by both reducing clock rate and disabling one or more transceiver chains.

In an example embodiment, a UE designed for an IoT or MTC application comprises a single antenna and a single transceiver chain. In this UE, power-consumption reduction is implemented only by reducing clock rate. In another embodiment, another UE, possibly operating in the same system 20, comprises a large number of antennas and transceiver chains, e.g., eight chains. In the latter UE, power-consumption reduction is implemented by both reducing clock rate and disabling selected transceiver chains. Other suitable configurations are also possible.

The different elements of UE 28 are typically implemented using dedicated hardware, such as using one or more Application-Specific Integrated Circuits (ASICs), Field-Programmable Gate Arrays (FPGAs) and/or RF Integrated Circuits (RFICs). Alternatively, some UE elements (e.g., UE processor 52) and/or some network-side features (e.g., the functions of processor 68) may be implemented using software executing on programmable hardware, or using a combination of hardware and software elements. In some embodiments, some or all of the elements of UE 28 are fabricated in a chip-set.

When implementing elements of system 20, such as UE processor 52 and/or network-side processor 68, in software on one or more programmable processors, the software may be downloaded to the processors in electronic form, over a network, for example, or it may, alternatively or additionally, be provided and/or stored on non-transitory tangible media, such as magnetic, optical or electronic memory.

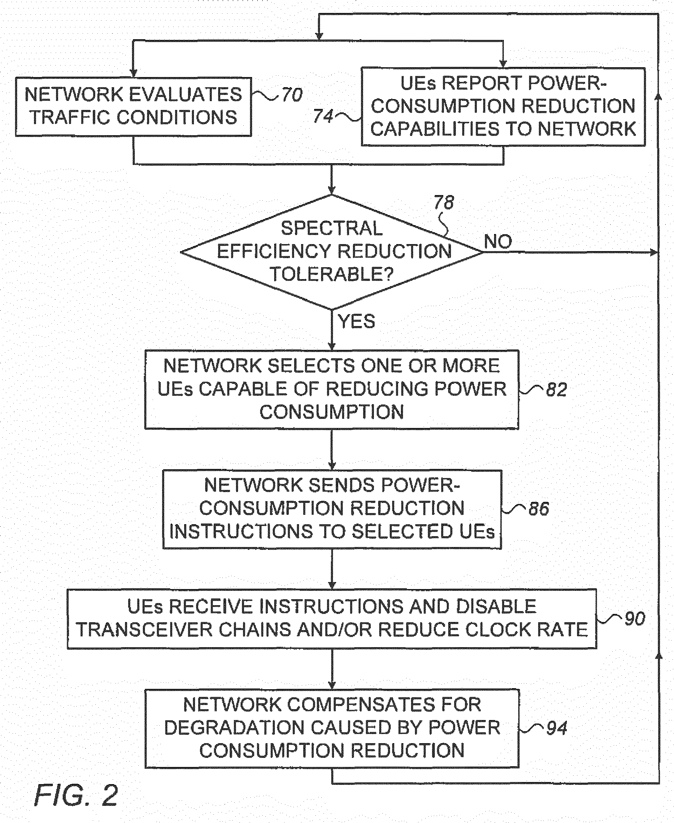

Fig. 2 is a flow chart that schematically illustrates a method for reducing power consumption in wireless communication terminals, in accordance with an embodiment that is described herein. The method begins with network-side processor 68 evaluating traffic conditions, at a traffic assessment operation 70. In a typical implementation, network-side processor 68 assesses the traffic demands in a certain geographical area and estimates whether the network has spare traffic capacity that can be traded for UE power consumption. In an embodiment, network-side processor 68 may assess traffic demand and check for excess traffic capacity in a given BS 24, over a group of (collocated or non-collocated) BSs 24, or over any other suitable area.

In addition, and typically but not necessarily in parallel, UEs that support the reduced-power-consumption mode report their capabilities to network-side processor 68, at a capabilities reporting operation 74. A UE typically reports its capabilities upon registering with system 20. At a checking operation 78, network-side processor 68 checks whether, based on the outcome of operation 70, spectral efficiency degradation can be tolerated in a certain geographical area. If not, the method loops back to operation 70 above.

If spectral efficiency degradation can be tolerated, network-side processor 68 selects one or more UEs 28, from among the UEs in the geographical area in question that support the reduced-power-consumption mode, at a selection operation 82. At an instruction operation 86, network-side processor 68 instructs the selected UEs to switch to the reduced-power-consumption mode.

In response to the instructions, each of the UEs in question disables one or more of its transceiver chains, and/or reduces the clock rate of one or more of its clock signals, at a power-consumption reduction operation 90.

At a network-side compensation operation 94, network-side processor 68 instructs one or more of BSs 24 to compensate for at least some of the performance degradation caused by the power-consumption reduction in the UEs. Several possibilities of network-side compensation techniques are described below. The method then loops back to operation 70 above.

The method flow of Fig. 2 above is depicted purely by way of example. In alternative embodiments, the disclosed techniques can be implemented using any other suitable method flow. For example, network-side compensation is optional, i.e., operation 94 is omitted in some embodiments.

In various implementations of operation 82 above, network-side processor 68 uses various criteria for selecting which UEs to instruct to switch to the reduced-power-consumption mode. In one example embodiment, network-side processor 68 selects UEs that are in Idle mode (as opposed to UEs that are Connected mode). When in Idle mode, the UE's traffic demands are very low. Switching an idle UE to the reduced-power-consumption mode will have small impact on the overall spectral efficiency of the system, even if network-side compensation is applied.

In another example embodiment, network-side processor 68 selects UEs that have large channel margins, e.g., UEs whose downlink and/or uplink Signal to Noise Ratio (SNR) is better than the required SNR by at least some predefined margin. In such cases, it may not be necessary to employ network-side compensation at all.

In yet another example embodiment, network-side processor 68 selects UEs that are currently requested by the BS to transmit with low transmission power, e.g., lower than a predefined power level. These UEs are typically, although not necessarily, located close to the serving BS. When switching such a UE to the reduced-power-consumption mode, the extent of network-side compensation will typically be small. Further alternatively, network-side processor may use any other suitable criteria, or combination of criteria, for selecting UEs to be switched to the reduced-power-consumption mode.

In some embodiments, network-side processor 68 compensates for the performance degradation caused by switching a certain UE 28 to the reduced-power-consumption mode, by modifying a communication scheme used for communicating with the UE. This sort of network-side compensation helps the network to maintain the required data rate and user experience.

In one embodiment, network-side processor 68 instructs the serving BS of the UE to transmit downlink signals to the UE with a higher power level. In an example embodiment, higher transmit power is used for selected components of the downlink signals, e.g., for paging indicators and/or paging channels addressed to the UE. In another embodiment, network-side processor 68 instructs the serving BS of the UE to grant the UE a higher transmit power level on the uplink.

In an embodiment, network-side processor 68 allocates additional time and/or frequency resources to the UE, on the downlink and/or on the uplink. In another embodiment, network-side processor 68 allocates additional spatial resources, e.g., additional transmit antennas, for transmitting downlink signals to the UE.

In yet another embodiment, network-side processor 68 instructs the serving BS to transmit multiple signals over the same time, frequency and/or spatial resources to the UE. This sort of compensation assumes that modem 44 of the UE is able to separate the multiple signals. One example approach is to transmit the multiple signals with different power levels, and then use interference cancellation techniques in modem 44 to distinguish between the signals. If the strongest signal has sufficient SNR to be successfully detected by modem 44, the modem regenerates this signal and cancels it from the composite received signal. The cancellation of the strongest signal in turn improves the SNR of the next-strongest signal, thus enabling modem 44 to detect it, as well. This process can be repeated iteratively.

In still another embodiment, network-side processor 68 instructs two or more BSs 24 to communicate with the UE using Coordinated Multipoint (CoMP) techniques on the uplink or downlink. In an example embodiment, multiple BSs are coordinated to receive uplink signals from the UE. In another example embodiment, multiple BSs are coordinated to transmit downlink signals jointly to the UE, enabling the UE to receive the signals with fewer transceiver chains. It is noted that CoMP techniques typically increase the bandwidth demand on the backhaul links of the network. Thus, in some embodiments, network-side processor 68 considers the availability of backhaul resources before activating this compensation scheme, or before instructing a UE to switch to the reduced-power-consumption mode in the first place.

The network-side compensation techniques listed above are depicted solely by way of example. In alternative embodiments, network-side processor 68 may apply any other suitable technique to compensate for the reduced performance caused by reducing power consumption at the UE.

In some embodiments, when a given UE reduces its clock rate and thus reduces its processing bandwidth, network-side processor 68 instructs the serving BS 24 to compress various control-channel signals to a smaller bandwidth. For example, in an LTE implementation, reducing processing bandwidth in the UE implies that the BS spreads Physical Downlink Control Channels (PDCCHs) over a narrower range of frequency Resource Elements (REs). As a result, frequency diversity is degraded. This degradation can be compensated for by increasing control-channel resources. For example, the serving BS can allocate additional power to the frequency-compressed PDCCHs. Alternatively, the serving BS may allocate additional time-frequency REs for control-channel transmission.

Although the embodiments described herein mainly address 3GPP LTE systems, the methods and systems described herein can also be used in other applications, such as in cellular communication systems in general.

It is noted that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

### The following is a list of further preferred embodiments of the invention:

Embodiment 1. A method for wireless communication, comprising:
   receiving in a wireless communication terminal, which is configured to receive and transmit signals using one or more transceiver chains, an instruction from a base station to modify electrical power consumption of the wireless communication terminal; and
   in response to the instruction, modifying the electrical power consumption by performing one or more of: (i) modifying a number of the transceiver chains that are active and (ii) modifying a clock rate in the wireless communication terminal.
Embodiment 2. The method according to embodiment 1, wherein modifying the number of the transceiver chains comprises performing one or more of:
   disabling or enabling one or more reception chains used for receiving the signals in the wireless communication terminal; and
   disabling or enabling one or more transmission chains used for transmitting the signals from the wireless communication terminal.
Embodiment 3. The method according to embodiment 1, wherein modifying the clock rate comprises switching from a first mode in which the wireless communication terminal performs signal processing of the transmitted or received signals with a first processing bandwidth, to a second mode in which the wireless communication terminal performs the signal processing with a second processing bandwidth, different from the first processing bandwidth.
Embodiment 4. The method according to embodiment 1, comprising, prior to receiving the instruction, sending from the wireless communication terminal to the base station a notification indicating that the wireless communication terminal supports an operational mode in which the electrical power consumption is reduced.
Embodiment 5. A wireless communication terminal, comprising:
   a transceiver, configured to receive and transmit signals using one or more transceiver chains; and
   a processor, which is configured to receive an instruction from a base station to modify electrical power consumption of the wireless communication terminal, and, in response to the instruction, to modify the electrical power consumption by performing one or more of: (i) modifying a number of the transceiver chains that are active, and (ii) modifying a clock rate in the terminal.
Embodiment 6. The wireless communication terminal according to embodiment 5, wherein the processor is configured to modify the number of the transceiver chains by performing one or more of:
   disabling or enabling one or more reception chains used for receiving the signals in the wireless communication terminal; and
   disabling or enabling one or more transmission chains used for transmitting the signals from the wireless communication terminal.
Embodiment 7. The wireless communication terminal according to embodiment 5, wherein the processor is configured to modify the clock rate by switching from a first mode in which the transceiver performs signal processing of the transmitted or received signals with a first processing bandwidth, to a second mode in which the transceiver performs the signal processing with a second processing bandwidth, different from the first processing bandwidth.
Embodiment 8. The wireless communication terminal according to embodiment 5, wherein the processor is configured to send to the base station, using the transceiver, prior to receiving the instruction, a notification indicating that the wireless communication terminal supports an operational mode in which the electrical power consumption is reduced.
Embodiment 9. A method for wireless communication, comprising:
   in a wireless communication network, selecting a wireless communication terminal served by the wireless communication network; and
   sending to the selected wireless communication terminal an instruction to perform one or more of:
      (i) modify a number of active transceiver chains in the wireless communication terminal; and
      (ii) modify a clock rate in the wireless communication terminal;
   so as to modify electrical power consumption of the selected wireless communication terminal.
Embodiment 10. The method according to embodiment 9, wherein selecting the wireless communication terminal comprises identifying excess traffic capacity in a geographical area, and selecting the wireless communication terminal from among wireless communication terminals in that geographical area.
Embodiment 11. The method according to embodiment 9, comprising, prior to sending the instruction, receiving in the wireless communication network a notification from the wireless communication terminal to be selected indicating that the wireless communication terminal supports a mode that modifies the number of the active transceiver chains or modifies the clock rate.
Embodiment 12. The method according to embodiment 9, comprising compensating in the wireless communication network for reduced performance of the selected wireless communication terminal, by modifying a communication scheme used for communicating with the selected wireless terminal.
Embodiment 13. The method according to embodiment 12, wherein modifying the communication scheme comprises modifying a power level of a signal exchanged with the selected wireless terminal.
Embodiment 14. The method according to embodiment 12, wherein modifying the communication scheme comprises adding one or more of: (i) time, (ii) frequency and (iii) spatial resources for communicating with the selected wireless terminal.
Embodiment 15. The method according to embodiment 12, wherein modifying the communication scheme comprises increasing a number of signals that are transmitted jointly to the selected wireless terminal over one or more of: (i) time, (ii) frequency and (iii) spatial resources.
Embodiment 16. The method according to embodiment 12, wherein modifying the communication scheme comprises communicating with the selected wireless terminal using multiple coordinated base stations.
Embodiment 17. The method according to embodiment 9, wherein selecting the wireless communication terminal comprises assessing whether the wireless communication terminal is Idle or Connected.
Embodiment 18. The method according to embodiment 9, wherein selecting the wireless communication terminal comprises assessing a quality of one or more channels exchanged between the wireless communication terminal and the wireless communication network.
Embodiment 19. The method according to embodiment 9, wherein selecting the wireless communication terminal comprises assessing a power level with which the wireless communication terminal is requested to transmit uplink signals to the wireless communication network.
Embodiment 20. Apparatus for communication, comprising:
   an interface for configuring a wireless communication network; and
   a processor, which is configured to select a wireless communication terminal served by the wireless communication network, and to send to the selected wireless communication terminal via the interface an instruction to perform one or more of:
      (i) modify a number of active transceiver chains in the wireless communication terminal, and
      (ii) modify a clock rate in the wireless communication terminal,
   so as to modify electrical power consumption of the wireless communication terminal.

## Claims

1. A method for wireless communication, comprising:
receiving in a wireless communication terminal, which is configured to receive and
transmit signals using one or more transceiver chains, an instruction from a base station to modify electrical power consumption of the wireless communication terminal; and
in response to the instruction, modifying the electrical power consumption by performing one or more of: (i) modifying a number of the transceiver chains that are active and (ii) modifying a clock rate in the wireless communication terminal.

2. The method according to claim 1, wherein modifying the number of the transceiver chains comprises performing one or more of:
disabling or enabling one or more reception chains used for receiving the signals in the wireless communication terminal; and
disabling or enabling one or more transmission chains used for transmitting the signals from the wireless communication terminal.

3. The method according to claim 1 or 2, wherein modifying the clock rate comprises switching from a first mode in which the wireless communication terminal performs signal processing of the transmitted or received signals with a first processing bandwidth, to a second mode in which the wireless communication terminal performs the signal processing with a second processing bandwidth, different from the first processing bandwidth.

4. The method according to one of claims 1 to 3, comprising, prior to receiving the instruction, sending from the wireless communication terminal to the base station a notification indicating that the wireless communication terminal supports an operational mode in which the electrical power consumption is reduced.

5. A wireless communication terminal, comprising:
a transceiver, configured to receive and transmit signals using one or more transceiver chains; and
a processor, which is configured to receive an instruction from a base station to modify electrical power consumption of the wireless communication terminal, and, in response to the instruction, to modify the electrical power consumption by performing one or more of: (i) modifying a number of the transceiver chains that are active, and (ii) modifying a clock rate in the terminal.

6. The wireless communication terminal according to claim 5, and configured to perform a method according to one of claims 1 to 4.

7. A method for wireless communication, comprising:
in a wireless communication network, selecting a wireless communication terminal served by the wireless communication network; and
sending to the selected wireless communication terminal an instruction to perform one or more of:
(i) modify a number of active transceiver chains in the wireless communication terminal; and
(ii) modify a clock rate in the wireless communication terminal;
so as to modify electrical power consumption of the selected wireless communication terminal.

8. The method according to claim 7, wherein selecting the wireless communication terminal comprises identifying excess traffic capacity in a geographical area, and selecting the wireless communication terminal from among wireless communication terminals in that geographical area.

9. The method according to claim 7 or 8, comprising, prior to sending the instruction, receiving in the wireless communication network a notification from the wireless communication terminal to be selected indicating that the wireless communication terminal supports a mode that modifies the number of the active transceiver chains or modifies the clock rate.

10. The method according to one of claims 7 to 9, comprising compensating in the wireless communication network for reduced performance of the selected wireless communication terminal, by modifying a communication scheme used for communicating with the selected wireless terminal.

11. The method according to claim 10, wherein modifying the communication scheme comprises:
modifying a power level of a signal exchanged with the selected wireless terminal; or
adding one or more of (i) time, (ii) frequency and (iii) spatial resources for communicating with the selected wireless terminal; or
increasing a number of signals that are transmitted jointly to the selected wireless terminal over one or more of: (i) time, (ii) frequency and (iii) spatial resources; or
communicating with the selected wireless terminal using multiple coordinated base stations.

12. The method according to one of claims 7 to 11, wherein selecting the wireless communication terminal comprises:
assessing whether the wireless communication terminal is Idle or Connected; or
assessing a quality of one or more channels exchanged between the wireless communication terminal and the wireless communication network; or
assessing a power level with which the wireless communication terminal is requested to transmit uplink signals to the wireless communication network.

13. Apparatus for communication, comprising:
an interface for configuring a wireless communication network; and
a processor, which is configured to select a wireless communication terminal served by the wireless communication network, and to send to the selected wireless communication terminal via the interface an instruction to perform one or more of:
(i) modify a number of active transceiver chains in the wireless communication terminal, and
(ii) modify a clock rate in the wireless communication terminal,
so as to modify electrical power consumption of the wireless communication terminal.

14. The apparatus of claim 13, further configured to perform a method according to one of claims 7 to 12.
